# EUROPÄISCHE PATENTSCHRIFT

(11) **EP 1 951 596 B1**
(45) Veröffentlichungstag und Bekanntmachung des Hinweises auf die Patenterteilung: **18.09.2013**
(21) Anmeldenummer: 06841268.3
(22) Anmeldetag: 31.10.2006
(51) Int. Cl.: B65D 85/10, B65D 65/38

(54) **ZIGARETTENVERPACKUNG MIT INNENUMHÜLLUNGEN AUS POLYMERFOLIE**
CIGARETTE PACKAGE PROVIDED WITH INTERNAL ENVELOPS MADE FROM POLYMER FILM
EMBALLAGE DE CIGARETTES COMPORTANT DES ENVELOPPES INTERIEURES EN PELLICULE POLYMERE

(30) Priorität: 03.11.2005 DE 102005053343
(43) Veröffentlichungstag der Anmeldung: 06.08.2008
(73) Patentinhaber: Treofan Germany GmbH & Co.KG, 66539 Neunkirchen (DE)
(72) Erfinder: BUSCH, Detlef, 66740 Saarlouis (DE); DRAGUN, Björn, 67746 Merzweiler (DE); SCHMITZ, Bertram, F-57200 Saargemünd (FR); DÜPRE, Yvonne, 67661 Kaiserslautern (DE)
(74) Vertreter: Kremer, Viola
(86) Internationale Anmeldenummer: PCT/EP2006/067961
(87) Internationale Veröffentlichungsnummer: WO 2007/051791

(56) Entgegenhaltungen:
- EP-A1- 0 618 250
- EP-A1- 1 245 616
- WO-A-2005/080078
- DE-A1- 4 201 558
- DE-A1- 10 127 314
- US-A- 6 153 276

## Beschreibung

Zigarettenverpacküng mit Innenumhüllungen aus Polymerfolie

Die Erfindung betrifft eine Zigaretten-Packung, die mindestens eine Außenverpackung und eine Innenumhüllung für Zigaretten umfaßt. Die Erfindung betrifft des weiteren einen Innerliner.

Zigaretten-Packungen sind üblicherweise so aufgebaut, dass der Packungsinhalt, nämlich eine Zigarettengruppe, von einer Innenumhüllung umgeben ist. Diese Innenumhüllung besteht nach dem Stand der Technik aus einem Stanniolzuschnitt, aus Aluminiumfolie, einer Aluminium-Papierkaschierung oder einem metallisiertem Papier. Häufig ist diese Innenumhüllung mit einer Bedruckung oder einer Prägung versehen. Frühere Stanniolzuschnitte sind heute üblicherweise durch Innenumhüllungen aus Papier ersetzt. Die Innenumhüllung ist häufig auf der Außenseite mit einer Bedruckung oder einer Metallisierung, gegebenenfalls in Kombination mit einer Prägung, versehen.

Bei der Herstellung der Verpackung werden die Zigaretten in diese Innenumhüllung, dem sogenannten Innerliner, eingewickelt und die umwickelte Zigarettengruppe von der Verpackungsmachine mit der Außenverpackung, beispielsweise einer Klappdeckel□packung oder einem Papieretikett, umfaltet.

Der Innerliner kann aus bedrucktem Papier, metallisiertem Papier oder anderen streifenföimigen Materialien bestehen. Diese Materialien werden an der Verpackungsmachine von einer Bobine abgezogen und auf die passende Länge zugeschnitten. Gegebenenfalls werden gezielte Einschnitte angebracht, um eine SollTrennstelle zu erzeugen, die beim ersten Öffnen der Packungen ein gezieltes Aufreißen des Inner-Liners ermöglicht.

Papiere und Metallfolien sind auf Grund der Falteigenschaften und der Reiß□eigenschaften besonders vorteilhaft. In dieser Anwendung müssen die Materialb ahnen gute Falteigenschaften (Dead-Fold) aufweisen, die sicherstellen, daß die ein□geschlagenen Zigaretten so fest umwickelt sind, daß sie bis zum Anbringen der Außenverpackung als Bündel erhalten bleiben. Des weiteren spielt das Reißverhalten eine wichtige Rolle, damit ein kontrolliertes Öffnen des Liners gewährleistet ist. Schließlich müssen die Zuschnitte eine gute Planlage aufweisen, damit die Verarbeitung nicht durch ein Aufrollen der Materialbahn berhindert wird.

Dieses Eigenschaftsprofil wird von Papier und metallisierten Papieren gut erfüllt. Folien aus thermoplastischen Polymeren haben inhärent sehr schlechte Falteigenschaften und gelten daher generell als ungeeignetes Material in dieser Anwendung. Des weiteren neigen Kunststoffolien in Form von kleinen Zuschnitten zu Curling, d.h.. diese Zuschnitte rollen sich von alleine in Längs- oder Querrichtung der Folienbahn.

Da Kunststoffolien jedoch unter Umweltaspekten und Kostengesichtspunkten häufig Vorteile gegenüber Papier haben ist die Substitution von Papier in verschiedensten Anwendungen aus Sicht des Folienherstelleis ein ständiges Anliegen.

Die deutsche Patentanmeldung DE 42 01 558 A1 offenbart ein Zigarettenpäckchen mit einer die Zigarettengruppe aufnehmenden, inneren Umhüllung aus Stanniolpapier, wobei das Stanniol der inneren Umhüllung wenigstens auf einer seiner Flächen mit einer lichtkorrosiven Substanz oberftächenbehandelt ist. Hinweise auf die Eignung einer aliphatischen Polyhydroxycarbonsäurefolie als Inner-Liner einer Zigarettenverpackung sind dieser Patentanmeldung allerdings nicht zu entnehmen.

Der Erfindung lag somit die Aufgabe zugrunde, eine Folie zur Verfügung zu stellen, welche sich zur Verwendung als Inner-Liner in Zigarettenverpackungen eignet und den Anforderungen in dieser Anwendung genügt.

Diese Aufgabe wird gelöst durch die Verwendung einer einschichtigen oder mehrschichtigen biaxial orientierten Folie als Inner-Liner einer Zigarettenverpackung, wobei die Folie 70 bis 100 Gew.-% eines Polymeren aus mindestens einer aliphatisehen Hydroxy□carbonsäure enthält, wobei die Folie eine Gesamtdicke von mindestens 20 bis 100 µm hat.

Die Erfindung kommt insbesondere bei Klappschachtcln und Weichverpackungen zum Einsatz. Der Inner-Liner aus Polyhydroxycarbonsäure-Folie, vorzugsweise PLA-Folie, ist insbesondere für Klappschachteln geeignet. Diese Schachteln bestehen üblicherweise aus dünnen Karton. Ein Schachtelteil dient zur Aufnahme des Pac kungsinhalts, nämlich einer Zigarettengruppe, die allseitig von der gefalteten Innenumhüllung aus Polyhydroxycarbonsäure bzw. PLA umgeben ist. An einer Rückwand des Schachtelteils ist ein Deckel angesenkt, der über eine Faltlinie mit der Schachtel verbunden ist. Weitere Einzelheiten zur Ausgestaltung von Klappfalt□schachteln sind bekannt und beispielsweise in der DE 43 33 462 beschrieben, auf welche Beschreibung hiermit ausddicklich Bezug genommen wird.

Die Zigarettengruppe als Packungsinhalt ist von der erfindungsgemäßen Innenumhüllung allseitig umgeben. Die so entstehende Einheit als packungsinhalt ist ein Zigarettenblock. Erfindungsgemäß wird zur Herstellung eines solchen Zigarettenblocks zur Umhüllung der Zigaretten eine Folie aus Polyhydroxycarbonsäure, vorzugsweise eine PLA-Folie eingesetzt.

Hierfür wird die Folie auf eine geeignere Breite zugeschnitten und als Rollenwäre an der Verpackungsmachine von einer Bobine abgezogen und auf die passende Länge geschnitten. Die Gestaltung des Zuschnitts richtet sich nach der Art der Faltung, die zur Anwendung kommt. Beispielsweise wird der zugeschnittene Folienabschnitt nach dem Prinzip der Seitenfaltung um die Zigarettengruppe herumgelegt. An eine durchgehend, geschlossene Bodenwand schließen "Vorderwand und Rückwand an, Beide schmalen, aufrechten Seitenwände. bestehen aus einander teilweise überdeckenden Seitenlappen. Eine obere Stirnwand wird ebenfalls durch Faltung gebildet, derart, dass innenliegende Ecklappen und trapezförmige Längslappen gebildet sind.

In einer weiteren Ausführungsform kann die Innenumhüllung im oberen Bereich mit einer Abziehlasche, einem sogenannten Flap, versehen werden. Hierfür wird eine Perforationslinie oder eine andere Schwächungslinie über die volle Breite des Zuschnitts angebracht. Beim ersten Öffnen der Packung wird die Abziehlasche durch Erfassen des äußeren Längslappens abgetrennt.

Der Zuschnitt wird im allgemeinen so von der Materialbahn abgetrennt, daß der Zuschnitt in Längsrichtung der Folie liegt. Die Materialbahn kann gegebenenfalls mit Druckflächen versehen werden, die vorzugsweise in Längsrichtung der Bahn mit Abstand voneinander angeordnet sind. Die Trennschnitte zum Abteilen der Zuschnitte erfolgen quer zur Laufrichtung der Folie. Die exakte Positionierung der Trennlinie kann durch eine Druckmarkensteuerung aufgrund einer Druckmarke erfolgen.

Alternativ kann der Zuschnitt so ausgebildet sein, dass die Breite der Folienbahn der Länge des Zuschnitts entspricht. Die Zuschnitte sind bei dieser Gestaltung mit ihrer Längserstreckung quer zur Materialbahn gerichtet. In diesem Falle ist die Materialbahn zu beiden Seiten mit durchlaufenden Druckstreifen versehen, insbesondere mit unterschiedlicher Breite.

Zuschnitte und Techniken zur Faltung der Inner-Liner, Einzelheiten zur Bedruckung von Zuschnitten und weitere Details sind an sich im Stand der Technik bekannt und beispielsweise in DE 201 20 977 oder DE 43 33 462 oder DE 25 11 241 beschrieben, auf welche hiermit ausdrücklich Bezug genommen wird.

Die in der beschriebenen Weise ausgebildeten Packungen mit Inner-Liner sind im allgemeinen zusätzlich mit einer Aussenumhüllung aus Folie, insbesondere Polypropylenfolie oder Zellglas versehen.

Erfindungsgemäß ist der Inner-Liner aus einer biaxial orientierten Folie, die eine oder mehrere Schichten aufweisen kann. Hauptbestandteil der Folie ist ein Polymer aus mindestens einer aliphatischen Hydroxycarbonsäure. Im allgemeinen enthält die Folie mindestens 70-100 Gew.-% Polymer aus aliphatischen Polyhydroxycarbonsäure, vorzugsweise PLA. Bevorzugt sind Ausführungsformen aus 80-99 Gew.-%, vorzugsweise 85-95 Gew.-% der genannten Polymeren, jeweils bezogen auf das Gewicht der Folie.

Überraschenderweise läßt sich eine Folie aus Polyhydroxycarbonsäure, vorzugsweise PLA hervorragend als Inner-Liner verwenden. Es wurde gefunden, daß die Folie nach dem Einschlag das Zigarettenbündel ausreichend fixiert. Die Folie zeigt keine Störungen bei der Verarbeitung auf der Verpackungsmachine. Es zeigte sich, daß die Zuschnitte überraschend wenig, teilweise gar keine Rollneigung aufweisen und somit die Probleme anderer thermoplastischen Folien vermeiden. Des weiteren sind Folien besonders vorteilhaft, weil auch bei schwankenden klimatischen Bedingungen eine gute stabile Verarbeitbarkeit gegeben ist. Es zeigte sich, daß im Vergleich zu Papier schwankende Temperaturen oder eine schwankende Luftfeuchtigkeit die Folie und ihre Eigenschaften kaum beeinflußt und keine Auswirkungen auf die Verwendung als Inner-Liner hat und sich immer gleichgut verarbeiten lässt.

Für die erfindungsgemäße Verwendung sind sowohl einschichtige als auch mehrschichtige Folien aus aliphatischer Polyhydroxycarbonsäure geeignet. Mehrschichtige Folien sind im allgemeinen aus einer dicken Basisschicht aufgebaut, welche die, größe Schichtdicke aufweist und 60 bis <100% der Gesamtdicke der Folie ausmacht. Diese Basisschicht wird vorzugsweise beidseitig, gegebenenfalls auch nur einseitig mit einer Deckschicht/en versehen. In weiteren Ausfühmngsformen sind zusätzliche Zwischenschichten oder Beschichtungen auf der äußeren Oberfläche der mehrschichtigen Folie möglich, wodurch vier- oder fünfschichtige, beschichtete oder unbeschichtete, Folien erhalten werden. Die Dicke der Deckschicht liegt im allgemeinen in einem Bereich von 0,5 bis 10 µm, vorzugsweise 0,5 - 6µm, insbesondere 1 bis 3µm. Die Gesamtdicke der Folie liegt erfindungsgemäß in einem Bereich von 20 bis 100µm, vorzugsweise 25 bis 80µm, insbesondere 30 bis 60µm. Die Deckschichten sind die Schichten, welche die äußeren Schichten der Folie bilden. Zwischenschichten sind naturgemäß zwischen der Basisschicht und den Deckschichten angebracht. Nachstehende Ausführungen zu den Schichten der Folie gelten sinngemäß in gleicher Weise für einschichtige Ausführungsformen der Folie.

Überraschend sind Folien mit einer Mindestdicke von 20µm besonders vorteilhaft für die erfindungsgemäße Verwendung als Inner Linner. Liegt die Dicke der Folie unter 20µun kommt es zu Stauungen auf der Maschine. Es wurde gefunden, dass überraschenderweise dünnere Folie noch besser in der erfindungsgemäßen Verwendung funktionieren. Bei zu großer Foliendicke zeigt die Folie zu große Rückstellkräfte, so daß die eingewickelten Zigaretten aus dem Bündel herausrutschen bevor die äußere Faltschachtel angebracht werden kann. Daher sollte eine maximale Dicke von 100 µm nicht überschritten werden.

Die Folie, sowie gegebenenfalls die einzelnen Schichten der Folie, enthält/enthalten 70 bis ca. 100 Gew.-%, vorzugsweise 80 bis 98 Gew.-% eines Polymeren aus mindestens einer aliphatischen Hydroxy□carbonsäuren, nachstehend auch PHC oder Polyhydroxy□carbonsäuren genannt. Hierunter sind Homopolymere oder Mischpolymerisate zu verstehen, welche aus polymerisierten Einheiten von aliphatischen Hydroxycarbonsäuren aufgebaut sind. Unter den für die vorliegende Erfindung geeigneten PHC sind insbesondere Polymilchsäuren geeignete. Diese werden nachstehend als PLA (Polylactidacid) bezeichnet. Auch hier sind unter dem Begriff PLA sowohl Homopolymere, welche nur aus Milchsäureeinheiten aufgebaut sind, als auch Mischpolymerisate zu verstehen, welche überwiegend Milchsäureeinheiten (>50%) in Verbindungen mit anderen aliphatischen Hydroxymilchsäureeinheiten enthalten.

Als Monomere der aliphatischen Polyhydroxycarbonsäure (PHC) sind insbesondere aliphatische Mono-, Di- oder Trihydroxycarbonsäuren, bzw. deren dimere cyclische Ester geeignet, worunter Milchsäure in ihrer D- oder L-Form bevorzugt ist. Derartige Polymere sind an sich im Stand der Technik bekannt und kommerziell erhältlich. Die Herstellung von Polymilchsäure ist gleichfalls im Stand der Technik beschrieben und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet. In den folgenden Veröffentlichungen ist die Herstellung von PLA beschrieben US 5,208,297, US 5,247,058 oder US 5,357,035.

Bevorzugt sind Polymilchsäuren, welche ausschließlich aus Milchsäureeinheiten aufgebaut sind. Hierbei sind insbesondere PLA Homopolymere bevorzugt, welche 80 - 100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzlich von der Milchsäure verschiedene aliphatische Polyhydroxy□carbonsäureeinheiten als Comonomer aufweisen, beispielsweise Glycolsäureeinheiten, 3-Hydroxypropansäureeinhaiten, 2,2-Dimethyl-3-hydroxy□propan□säureeinheiten oder höhere Homologe der Hydroxycarbonsäuren mit bis zu 5 Kohlenstoffatomen.

Bevorzugt sind Milchsäurepolymere (PLA) mit einem Schmelzpunkt von 110 bis 170°C, vorzugs□weise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt in einem Bereich von mindestens 10.000 bis 500.000 (Zahlenmittel), vorzugsweise 50.000 bis 300.000 (Zahlenmittel). Die Glasübergangs□temperatur Tg liegt in einem Bereich von 40 bis 100°C, vorzugsweise 40 bis 80°C.

Die einzelnen Schichten der Folie enthalten jeweils 70 bis etwa 100 Gew.-% der vorstehend beschriebenen Polymeren, vorzugsweise 80 bis 98 Gew.-%, sowie gegebenenfalls zusätzlich Additive, wie Neutralisation□s□mittel, Stabilisatoren, Gleitmittel, Antistatika und Füllstoffe. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Grundsätzlich können die einzelnen Schichten die gleiche Zusammensetzung hinsichtlich Polymer und Additivierung aufweisen. Im allgemeinen wird die Zusammensetzung der Basisschicht verschieden von der Zusammensetzung der übrigen Schichten sein. Insbesondere werden Additive wie Antiblockmittel oder Gleitmittel den Deckschichten zugesetzt; wohingegen Füllstoffe oder Pigmente vorzugsweise der Basisschicht zugefügt werden. Aufbau und Zusammensetzung der einzelnen Schichten der Folie können jedoch in weiten Grenzen variieren.

Es wurde gefunden, daß sich transparente und weiße Ausführungsformen ohne Vakuolen besonders gut für diese Anwendung eignen. Es ist von Polypropylenfolien, bekannt, daß opake PP-Folien mit Vakuolen in der Basisschicht bessere Falteigenschaften als transparente PP Folien aufweisen. Überraschenderweise zeigen die vakuolenfreien PLA Folien in dieser Anwendung auch sehr gute Falteigenschaften im Vergleich zu vakuolenhaltigen Ausführungsformen. Unter transparenten Folien werden im Sinne der vorliegenden Erfindung solche Folien verstanden, deren Lichtdurchlässigkeit nach ASTM-D 1003-77 über 75 %, vorzugsweise über 95 %, liegt. Weiße PLA Folien sind durch den Zusatz von Weißpigment weiß gefärbt, haben aber gleichfalls keine Vakuolen. Diese Ausführungsformen enthalten im allgemeinen TiO2 in einer Menge von 1-12 Gew.-% in mindestens einer, gegebenenfalls in mehreren Schichten. Grundsätzlich kann TiO2 in diesen Mengen der Basisschicht, einer oder beiden Deckschichten oder auch einer oder beiden Zwischenschichten zugesetzt werden.

Grundsätzlich ist auch der Einsatz von opaken oder weiß-opaken Ausführungsformen der Folie möglich. Diese Folien enthalten in der Basisschicht vakuoleninitierende Füllstoffe, beispielsweise Cycloolefinco□polymer (opake Folien) und gegebenenfalls zusätzlich Pigmente (weiß-opake Folien). Auch in diesem Fall ist als Pigment TiO₂ bevorzugt und wird in einer Menge von bis zu 10 Gew.-%, vorzugsweise 1 bis 8 Gew.-%, jeweils bezogen auf die Basisschicht, eingesetzt.

Gegebenenfalls kann zur Optimierung weiterer Eigenschaften die Folie beschichtet werden. Typische Beschichtungen sind haftveimittelnde, schlupfverbessernd oder dehäsiv wirkende Schichten. Gegebenenfalls können diese zusätzlichen Schichten über in-line coating mittels wässriger oder nicht-wässriger Dispersionen vor der Querverstreckung oder off-line aufgetragen werden.

In einer weiteren Ausführungsform werden die Folien vor der Verwendung als Inner-Liner metallisiert. Bei der Anwendung als Inner-liner bildet die metallisierte Seite die sichtbare Seite. In einer weiteren Ausführungsform kann die Folie beidseitig metallisiert werden. Diese Ausführungsform hat den zusätzlichen Vorteil, daß der direkte Kontakt zwischen den Zigaretten und der Folie vermieden wird, so daß keine geschmacklichen Beeinträchtigungen der Zigaretten durch die Folie möglich sind, bzw. weitgehend unterbunden werden.

In einer weiteren Ausführungsform kann die metallisierte oder unmetallisierte Folie zusätzlich mit einer Prägung versehen werden, die zum einen dekorativen Charakter hat und zu einer weiter verbesserten Planlage beiträgt. Überraschenderweise lassen sich die Folien nach Metallisierung und Prägung genauso gut wie bisher verwendete Papier-Inner-Liner verarbeiten. Außerdem kommen die geprägten metallisierten Folien dem optischen Erscheinungsbild von metallisierten Papieren sehr nahe.

Die PHC-Folie wird nach dem an sich bekannten Koextrusionsverfahren hergestellt. Im Rahmen dieses Verfahrens werden die den Schichten der Folie entsprechende Schmelze/n durch eine Flachdüse koextrudiert werden, die so erhaltene mehrschichtige Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell laufenden Walzen. Zum Querverstrecken benutzt man allgemein einen entsprechenden Kluppenrahmen. Die weitere Beschreibung der Folienherstellung erfolgt am Beispiel einer Flachfolienextrusion mit anschließender sequentieller Streckung.

Die Schmelze/n wer□den durch eine Flachdüse (Breitschlitz□düse) gepreßt, und die aus□gepreßte Folie wird auf einer oder mehreren Abzugs□walzen bei einer Temperatur von 10 bis 100°C, vorzugsweise 20 bis 80°C, abgezogen, wobei sie ab□kühlt und sich verfestigt.

Die so erhaltene Folie wird dann längs und quer zur Extrusionsrichtung ge□streckt. Das Längs□strecken wird man vorzugs□weise bei einer Walzentemperatur der Streckwalzen von 40 bis 130°C, vorzugsweise 50 bis 100°C zweck□mä□βigerweise mit Hilfe zweier ent□spre□chend dem angestrebten Streckverhältnis verschieden schnell laufender Wal□zen durch□führen und das Querstrecken vorzugsweise bei einer Temperatur von 50 bis 130°C, vorzugsweise 60 bis 120°C mit Hilfe eines entspre□chenden Kluppen□rah□mens. Die Längsstrec□kverhältnisse können Bereich von 1,5 bis 8 variiert werden. Bei der Herstellung von Folien mit einer Basisschicht, die vakouleninitierende Füllstoffe enthält, ist ein höheres Längsstreckverhältnis von 3 bis 6 bevorzugt, wohingegen Folien mit einer transparente Basisschicht vorzugsweise im Bereich von 1,5 bis 3,5 verstreckt werden. Die Querstreckverhält□nisse liegen im Bereich von 3 bis 10, vorzugsweise 4 bis 7.

An die Streckung der Folie schließt sich ihre Thermofixierung (Wämebe□hand□lung) an, wobei die Folie konvergierend etwa 0,1 bis 10 s lang bei einer Temperatur von 60 bis 150°C gehalten wird (Konvergenz bis zu 25%). Anschließend wird die Folie in üblicher Weise mit einer Aufwickeleinrichtung aufgewickelt.

Zur Charakterisierung der Rohstoffe und der Folien wurden die folgenden Messwerte benutzt:

Die Erfindung wird nachstehend an Hand von Ausführungsbeispielen erläutert

Beispiel 1:

Es wurde durch Extrusion und anschließende stufenweise Orientierung in Längs- und Querrichtung eine transparente dreischichtige PLA-Folie mit einer Dicke von etwa 30µm hergestellt. Die Basisschicht bestand zu nahezu 100 Gew.-% aus einer Polymilchsäure mit einem Schmelz□punkt von etwa 160 °C. Die Schicht enthielt zusätzlich Stabilisatoren und Neutralisationsmittel in üblichen Mengen. Die beiden siegelfähigen Deckschichten waren im wesentlichen aus einer amorphen Polymilchsäure aufgebaut, wobei diese Polymilchsäure ein L/D-Verhältnis von ca. 40/60 aufweist. Zusätzlich enthielten die Deckschichten jeweils 0,1 Gew.% SiO₂basierte Partikel als Antiblockmittel. Die Dicke der Deckschichten betrug jeweils 2,5µm.

Die Herstell□bedingungen in den einzelnen Veifahrensschritten waren: .

Extrusion: Temperaturen 170 - 200°C

Temperatur der Abzugswalze: 60°C

Längsstreckung: Temperatur: 68 °C

Längsstreckverhältnis: 2,0

Querstreckung: Temperatur: 88 °C

Querstreckverhältnis (effektiv): 5,5

Fixierung: Temperatur: 75 °C

Konvergenz: 5 %

Beispiel 2:

Es wurde eine Folie wie in Beispiel 1 beschrieben hergestellt. Im Unterschied zu Beispiel 1 wurden keine Deckschichten aufgebracht. Im übrigen wurden die Zusammensetzung und die Herstellbedingungen nicht verändert. Es wurde ebenfalls eine transparente Folie, aber einschichtige Folie mit einer Dicke von 25 µm hergestellt.

Beispiel 3:

Es wurde durch Extrusion und anschließende stufenweise Orientierung in Längs- und Querrichtung eine opake einschichtige PLA-Folie mit einer Dicke von 30 µm hergestellt. Diese Schicht war zu ca. 95 Gew.-% aus einer Polymilchsäure mit einem Schmelzpunkt von 135°C und einem Schmelzflußindex von ca. 3 g/10min und einer Glastemperatur von 60 °C und ca. 5 Gew.-% COC (Ticona Topas 6013) mit einem Tg von 140°C aufgebaut. Die Schicht enthielt zusätzlich Stabilisatoren und Neutralisationsmittel in üblichen Mengen. Die Herstellbedingungen in den einzelnen Verfahrensschritten waren:

Extrusion: Temperaturen 170 - 200°C

Temperatur der Abzugswalze: 60°C

Längsstreckung: Temperatur: 68 °C

Längsstreckverhältnis: 4,0

Querstreckung: Temperatur: 88 °C

Querstreckverhältnis (effektiv): 5,5

Fixierung: Temperatur: 75 °C

Konvergenz: 5 %

Auf diese Weise wurde eine opake Folie mit charakteristischem perlmuttartigem Glanz und einer reduzierten Dichte von ca. 0,75 g/cm³ erhalten.

Die Folien wurden auf einer kommerziellen Zigaretteneinschlagsmaschine als Inner-liner eingesetzt und konnten ohne größere Probleme verwendet werden. Die nicht vakuolenhaltigen Folien nach Beispiel 1 und 2 erwiesen sich als besonders vorteilhaft.

Im Vergleich konnten biaxial orientierte Polypropylenfolien in dieser Anwendung nicht eingesetzt werden. Auf Grund der starken Rückstellkräfte des Materials konnten die einzelnen Zigaretten nicht richtig eingeschlagen werden.

## Patentansprüche

1. Verwendung einer einschichtigen oder mehrschichtigen biaxial orientierten Folie als Inner-Liner einer Zigarettenverpackung, **dadurch gekennzeichnet, daß** die Folie 70 bis 100 Gew.-% eines Polymeren aus mindestens einer aliphatischen Polyhydroxy□carbonsäure enthält und die Folie eine Gesamtdicke von mindestens 20 bis 100µm hat.

2. Verwendung einer Folie nach Anspruch 1, **dadurch gekennzeichnet, daß** die Folie transparent ist.

3. Verwendung einer Folie nach Anspruch 1, **dadurch gekennzeichnet, daß** die Folie weiß ist.

4. Verwendung einer Folie nach Anspruch 1, **dadurch gekennzeichnet, daß** die Folie eine opake vakuolenhaltige Basisschicht hat.

5. Verwendung einer Folie nach einem der Ansprüche 1 bis 4. **dadurch gekennzeichnet, daß** die Folie auf einer Oberfläche metallisiert ist.

6. Verwendung einer Folie nach einem der Ansprüche 1 bis 4, **dadurch gekennzeichnet, daß** die Folien beidseitig metallisiert ist.

7. Verwendung einer Folie nach einem der Ansprüche 1 bis 6, **dadurch gekennzeichnet, daß** die Folie geprägt ist.

8. Verwendung einer Folien nach Anspruch 5, **dadurch gekennzeichnet, daß** die metallisierte Oberfläche der Folie geprägt ist

9. Verwendung einer Folien nach einem der Ansprüche 1 bis 8, **dadurch gekennzeichnet, daß** die Folie in der Basisschicht 80 bis < 98 Gew.-% eines Polymeren aus aliphatischer Polyhydroxy□carbonsäure enthält.

10. Verwendung einer Folien nach einem der Ansprüche 1 bis 9, **dadurch gekennzeichnet, daß** Folie beidseitig Deckschichten aufweist und die Deckschichten 70 bis <100 Gew.-% eines Polymeren aus aliphatischer Polyydroxy□carbonsäure enthält.

11. Verwendung einer Folie nach einem der Ansprüche 1 bis 10, **dadurch gekennzeichnet, daß** die aliphatische Polyhydroxycarbonsäure eine Polymilchsäure ist.

12. Verwendung einer Folie nach einem der Ansprüche 1 bis 11, **dadurch gekennzeichnet, daß** die Deckschicht eine Dicke von 0,5 bis 6 µm hat.

13. Verwendung einer Folie nach einem der Ansprüche 1 bis 12, **dadurch gekennzeichnet, daß** die Deckschicht siegelfähig ist.

14. Verwendung einer Folie nach einem der Ansprüche 1 bis 13, **dadurch gekennzeichnet, daß** die Zigarettenpackung eine Klappfaltschachtel ist.

15. Verwendung einer Folie nach einem der Ansprüche 1 bis 13, **dadurch gekennzeichnet, daß** die Zigarettenpackung eine Weichpackung ist.

## Claims

1. Use of a single-layered or multilayered, biaxially-oriented film as inner liner of cigarette packaging, **characterised in that** the film contains 70 to 100% by weight of polymer of at least one aliphatic polyhydroxycarboxylic acid and the film has a total thickness of at least 20 to 100µm.

2. Use of a film according to claim 1, **characterised in that** the film is transparent.

3. Use of a film according to claim 1, **characterised in that** the film is white.

4. Use of a film according to claim 1, **characterised in that** the film has an opaque, vacuolated base layer.

5. Use of a film according to one of the claims 1 to 4, **characterised in that** the film is metallised on one surface.

6. Use of a film according to one of the claims 1 to 4, **characterised in that** the film is metallised on both sides.

7. Use of a film according to one of the claims 1 to 6, **characterised in that** the film is embossed.

8. Use of a film according to claim 5, **characterised in that** the metallised surface of the film is embossed.

9. Use of a film according to one of the claims 1 to 8, **characterised in that** the film contains 80 to <98% by weight of a polymer of aliphatic polyhydroxycarboxylic acid in the base layer.

10. Use of a film according to one of the claims 1 to 9, **characterised in that** the film has top layers on both sides, and the top layers contain 70 to <100% by weight of a polymer of aliphatic polycarboxylic acid.

11. Use of a film according to one of the claims 1 to 10, **characterised in that** the aliphatic polyhydroxycarboxylic acid is a polylactic acid.

12. Use of a film according to one of the claims 1 to 11, **characterised in that** the top layer has thickness of 0.5 to 6 µm.

13. Use of a film according to the claims 1 to 12, **characterised in that** the top layer is sealable.

14. Use of a film according to one of the claims 1 to 13, **characterised in that** that cigarette packaging is a flip pack.

15. Use of a film according to one of the claims 1 to 13, **characterised in that** the cigarette packaging is a soft packaging.

## Revendications

1. Utilisation d'une feuille biaxialement orientée de type monocouche ou multicouche en tant que doublure intérieure d'un emballage pour cigarettes, **caractérisée en ce que** ladite feuille contient 70 à 100 % en poids d'un polymère obtenu à partir d'au moins un acide polyhydroxycarboxylique aliphatique et ladite feuille présente une épaisseur totale d'au moins 20 à 100 µm.

2. Utilisation d'une feuille selon la revendication 1, **caractérisée en ce que** ladite feuille est transparente.

3. Utilisation d'une feuille selon la revendication 1, **caractérisée en ce que** ladite feuille est blanche.

4. Utilisation d'une feuille selon la revendication 1, **caractérisée en ce que** ladite feuille comporte une couche de base laquelle est opaque et contient des vacuoles.

5. Utilisation d'une feuille selon l'une des revendications 1 à 4, **caractérisée en ce que**, sur l'une de ses surfaces, ladite feuille est métallisée.

6. Utilisation d'une feuille selon l'une des revendications 1 à 4, **caractérisée en ce que**, sur ses deux faces, ladite feuille est métallisée.

7. Utilisation d'une feuille selon l'une des revendications 1 à 6, **caractérisée en ce que** ladite feuille est gaufrée.

8. Utilisation d'une feuille selon la revendication 5, **caractérisée en ce que** la surface métallisée de ladite feuille est gaufrée.

9. Utilisation d'une feuille selon l'une des revendications 1 à 8, **caractérisée en ce que** ladite feuille contient, dans ladite couche de base, 80 à < 98 % en poids d'un polymères obtenu à partir d'acide polyhydroxycarboxylique aliphatique.

10. Utilisation d'une feuille selon l'une des revendications 1 à 9, **caractérisée en ce que** ladite feuille comporte, sur ses deux faces, des couches de couverture et que lesdites couches de couverture contiennent 70 à < 100 % en poids d'un polymère obtenu à partir d'acide polyhydroxycarboxylique aliphatique.

11. Utilisation d'une feuille selon l'une des revendications 1 à 10, **caractérisée en ce que** ledit acide polyhydroxycarboxylique aliphatique est un acide polylactique.

12. Utilisation d'une feuille selon l'une des revendications 1 à 11, **caractérisée en ce que** ladite couche de couverture a une épaisseur de 0,5 à 6 µm.

13. Utilisation d'une feuille selon l'une des revendications 1 à 12, **caractérisée en ce que** ladite couche de couverture est apte au scellement.

14. Utilisation d'une feuille selon l'une des revendications 1 à 13, **caractérisée en ce que** le paquet de cigarettes et un paquet cartonné comportant un élément repliable.

15. Utilisation d'une feuille selon l'une des revendications 1 à 14, **caractérisée en ce que** le paquet de cigarettes est un paquet souple.
